# EUROPÄISCHE PATENTSCHRIFT

(11) **EP 0 420 820 B1**
(45) Veröffentlichungstag und Bekanntmachung des Hinweises auf die Patenterteilung: **24.11.1993**
(21) Anmeldenummer: 90810734.5
(22) Anmeldetag: 25.09.1990
(51) Int. Cl.: B21D 43/02

(54) **Verfahren und Vorrichtung zum Einziehen von Draht in eine Scherstation einer Umformpresse**
Process and device for drawing wire into a cutting device of a forming press
Procédé et dispositif pour enfiler du fil dans une station de coupe d'une presse de formage

(30) Priorität: 27.09.1989 CH 3506/89
(43) Veröffentlichungstag der Anmeldung: 03.04.1991
(73) Patentinhaber: Hatebur Umformmaschinen AG, CH-4153 Reinach (CH)
(72) Erfinder: Zanzerl, Hermann, CH-4305 Olsberg (CH); Dettwiler, Heinz, CH-4419 Lupsigen (CH)
(74) Vertreter: Eschmann, Heinz

(56) Entgegenhaltungen:
- EP-A- 0 196 466
- DE-B- 1 074 537
- DE-B- 2 118 652
- DE-C- 275 787
- GB-A- 633 704
- GB-A- 973 560
- GB-A- 1 024 798

## Beschreibung

Die Erfindung bezieht sich auf ein Verfahren nach dem Oberbegriff des Patentanspruchs 1 und eine Vorrichtung zur Durchführung dieses Verfahrens nach dem Oberbegriff des Patentanspruchs 4.

Beim Scheren von drahtförmigem Rohmaterial zur Herstellung längengenauer Drahtabschnitte ist es üblich, das über Einzugsrollen zugeführte Rohmaterial stirnseitig gegen einen einstellbaren Anschlag einzuziehen. Die korrekte Berührung des Anschlags durch die Rohmaterialstirnseite wird in der Produktion üblicherweise elektrisch überwacht. Mit einer solchen Ueberwachung wird beispielsweise erreicht, dass bei fehlender Rohmaterialberührung am Anschlag die Umformpresse sofort gestoppt wird, um nicht zu kurz abgeschnittene Abschnitte zu erhalten.

Damit ein sicheres Berühren des Anschlags gewährleistet werden kann, wird in der Praxis der Einzughub immer etwas zu lang eingestellt, so daß ein gewisser Überhub entsteht. Sobald das eingezogene Rohmaterial mit seiner Stirnseite den Anschlag berührt, rutschen infolge des Ueberhubs die Einzugsrollen auf dem Rohmaterial durch, so dass dieses fest gegen den Anschlag gedrückt wird. Zwar führt dies zu einer zufriedenstellenden Massgenauigkeit des Abschnitts, aber gleichzeitig auch zu einer gewissen Verletzung und/oder Verbiegung aufgrund der Prellschlagwirkung am Anschlag. Wenn das Abschnittsmesser nach dem Abtrennen eines Abschnitts seinen Rückhub ausführt, kann die Scherfläche des Rohmaterials, das vor dem Abtrennen noch unter einer gewissen Längsdruckspannung stand, so weit in den Bewegungsbereich des Abschnittsmessers hineinragen, dass das Rohmaterial an diesem entlangschürft und dadurch stirnseitig verletzt werden kann. Dabei kann z.B. ein Span abgeschert werden, was die Abschnittqualität gravierend verschlechtert, oder es kann eine sogenannte Brauenbildung auftreten.

Die Aufgabe der Erfindung besteht somit zunächst darin, ein Verfahren zum Einziehen von Rohmaterial in eine Scherstation einer Umformpresse zu schaffen, mit welchem die Abschnittqualität verbessert werden kann und insbesondere Deformationen oder Verletzungen der Materialabschnitte unterbleiben. Auch bezieht sich die Aufgabe auf die Schaffung einer möglichst einfach aufgebauten funktionssicheren Vorrichtung zur Durchführung dieses Verfahrens.

Es ist dem Fachmann ferner bekannt, dass derartige mechanische Vorrichtungen, die auf dem Zusammenwirken zahlreicher in Serie geschalteter Elemente basieren, nicht ohne "Spiel" realisiert werden können. Im vorliegenden Zusammenhang bedeutet dies, dass der Einzugsmechanismus nach beendetem Einzug kurzzeitig innerhalb der Spiele instabil wird, der Kraftschluss der beteiligten Getriebeteile kurzzeitig unterbrochen wird, um zu Beginn des darauffolgenden Einzughubs ruckartig unter Spielausgleich wieder aufgenommen zu werden. Da die beteiligten, zu übertragenden Kräfte jeweils mehrere Tonnen betragen, ergibt sich hieraus eine Dauerbeanspruchung der Vorrichtung, die sich insbesondere auf die Lebensdauer, unter anderem aber auch auf das Betriebsgeräusch der Maschine, auswirken muss.

Ein weiterer Aspekt der der Erfindung zugrundeliegenden Aufgabe liegt somit ferner darin, die mit den erwähnten Spielen verbundenen Nachteile zu beseitigen und dadurch insbesondere einen sanften, ruckfreien Betrieb des intermittierend arbeitenden Einzugs zu gewährleisten. Der Anpressdruck der Einzugsrollen auf das einzuiehende Rohmaterial kann verringert werden, da die Einzugsrcollen nicht mehr oder weniger durchrutschen als bei herkömmlichen Antriebssystemen. Verletzungen an der Materialoberfläche werden dadurch vermieden.

Die erfindungsgemäße Lösung dieser Aufgabe ist bezüglich des Verfahrens im Patentanspruch 1 und hinsichtlich der Vorrichtung im Patentanspruch 4 im einzelnen definiert. Weitere Merkmale der jeweils abhängigen Ansprüche betreffen vorteilhafte Ausgestaltungen des Verfahrens bzw. der Vorrichtung nach der Erfindung.

Durch das erfindungsgemäße Anlegen eines dem Einzugsrollenantrieb kontinuierlich entgegenwirkenden Drehmoments wird eine Gegenantriebskraft erzeugt, die als Bremskraft dient und einerseits die Überschußenergie des beschleunigten Rohmaterials am Ende der Einzughubbewegung vernichtet und andererseits das Rohmaterial nach erfolgtem Abtrennen etwas zurückzieht, um das den Rückhub ausführende Scher- oder Abschnittsmesser passieren zu lassen, ohne die Rohmaterial-Stirnseite wesentlich zu berühren.

Durch dieses erfindungsgemässe Verfahren entfällt einerseits die Notwendigkeit einer komplizierten, separaten elektronischen Steuerung mittels Sensoren etc. Andererseits wird das Aufprallen des Rohmaterials am Anschlag vermieden, da die Rückzugkraft eine permanente Bremswirkung ausübt. Hinzu kommt der weitere Vorteil, dass Spiele im Einzugantrieb entfallen, da das überlagerte Gegendrehmoment die beispielsweise an den Zahnflanken auftretenden Spiele aufhebt; das ruckartige Anfahren beim Einzughubbeginn wird dadurch ebenfalls ausgeschaltet. Die Einzugsrollen rutschen nicht durch und der Rollenanpressdruck kann etwas reduziert werden. Oberflächenverletzungen am Rohmaterial werden vermieden oder zumindest vermindert.

Eine herkömmliche Einzugsvorrichtung mit Einzugsrollen, die im Rhythmus der Metallumformmaschine das Rohmaterial intermittierend einziehen, zeigt die GB-A-633 704. Durch Ueberhub etc. beim Vorlauf entstandene Spannungen sollen während des Rücklaufs des Einzugantriebs abgebaut werden. Der Einzugmechanismus lässt sich manuell mit einer Art Riegelkupplung vom Kurbelantrieb der Maschine trennen, so dass die Maschine auch bei eingekuppeltem Einzug weiterlaufen kann. Ebenfalls kuppelt sich der Einzug kurzzeitig, jeweils am Ende des Einzughubes, automatisch aus.

Der Draht kann sich etwas zurückbewegen, er ist nicht mehr eingespannt und das Kurzeinziehen, welches zum bekannten Schnitzelscheren (Nibbling) führt, wird dadurch vermieden. Eine Sicherung (fool proof) verhindert das Auskuppeln während des Einzughubes.

Die vorliegende Erfindung weist demgegenüber keine mechanische, dem Verschleiss unterworfene Kupplungseinrichtung für den Drahtrückzug auf, sondern wirkt mit einem Hydromotor so der Einzugkraft entgegen, dass der Drahtrückzug fliessend bzw. ohne Uebergang nach der Beendigung des Einzughubes beginnen kann. Der Drahtrückzug dieser Vorrichtung ist somit "stufenlos" gesteuert. Der Draht wird also nicht nur entspannt, sondern kontrolliert, d.h. zwischen den Einzugsrollen eingespannt, zurückbewegt. Dabei gibt es keine dem Zufall überlassene Rückzugbewegung des Rohmaterials bei ausgekuppeltem Einzugantrieb und das Antriebsgetriebe des Einzugs arbeitet spielfrei.

Aus der EP-A-0 196 466, welche sich ausschliesslich auf Warmpressen bezieht, ist es bekannt, einen Stangenrückzug nach dem Abscheren vorzunehmen. Hierdurch soll eine Stangenverlängerung, die erwartungsgemäß aufgrund einer thermischen Längenausdehnung erfolgt, kompensiert werden. Zur Ausführung der Rückzugbewegung wird nach Beendigung des Einzughubs ein vom Hauptantrieb der Umformpresse unabhängiger Einzugsrollen-Antriebsmotor umgesteuert. Somit wird mit diesen bekannten Maßnahmen lediglich eine zeitlich linear ablaufende Umsteuerung des Einzugsantriebs, aber keine Überlagerung des Antriebsdrehmoments bzw. auch keine Bremsmomentausübung erreicht, die, gemäß der Erfindung, gleichzeitig mit und während des laufenden Einzugs stattfinden kann.

Ferner ist bei der erfindungsgemäßen Vorrichtung der Einzugsantrieb über ein mechanisches Kurbelgetriebe mit dem Hauptantrieb der Kaltumformmaschine gekoppelt. Die vom Hauptantrieb abgezweigte Antriebsleistung für den Einzugsantrieb ist, relativ betrachtet, gering und fällt bei der Energiebilanz kaum ins Gewicht. Im Unterschied dazu ist der bei der EP-A-0 196 466 benötigte zusätzliche Einzugsantrieb relativ energieaufwendig.

Gemäß einer vorteilhaften Ausgestaltung der Erfindung läßt sich die Rückzugbewegung des Rohmaterials auf die Gesamtheit der im Einzugsrollenantrieb auftretenden Spiele einstellen. Wenn bei der erfindungsgemäßen Vorrichtung als Antriebselement ein Hydraulikmotor Verwendung findet, ist eine solche Einstellung durch Druckänderungen im Hydrauliksystem besonders einfach realisierbar. Auch besitzt der Einsatz eines Hydraulikantriebs gegenüber bekannten Einzugsmechanismen, die z.B. mit Friktionsbremsen arbeiten, erhebliche Vorteile. Beispielsweise sind auftretende Wärmeabfuhrprobleme ohne Schwierigkeiten durch externe Kühlaggregate lösbar. Es treten bei einem Hydraulikantrieb auch keine Bremskraftveränderungen infolge Verschleiß, wie bei Bremsbelägen, auf, so daß bei dieser Antriebsart eine insgesamt hohe Betriebssicherheit gewährleistet werden kann.

Auch ist die Überwachung eines Hydraulikantriebs unproblematisch. Sowohl das entgegenwirkende Drehmoment, als auch die Rückzugbewegungen können über die Kontrolle der Hydraulikdruckvorgänge, beispielsweise elektrisch oder elektronisch einfach geregelt und überwacht werden. Sollte ein technisches Versagen auftreten, könnte dies durch einen Druckschalter festgestellt und entsprechend gemeldet oder eine Betriebsabschaltung der Presse durchgeführt werden.

Weitere Merkmale und Vorteile der Erfindung ergeben sich aus der nachfolgenden Beschreibung eines bevorzugten Ausführungsbeispiels anhand von Zeichnungen. Es zeigen:
Fig. 1a eine schematische Aufsicht einer Scherstation vor Scherbeginn,
Fig. 1b die gleiche Scherstation nach dem Abscheren eines Abschnittes,
Fig. 2a eine schematische Schnittdarstellung in Aufsicht, welche das Verbiegen des mit Ueberhub eingezogenen Rohmaterials (1) vor und nach der Schere zeigt,
Fig. 2b schematische Schnittdarstellungen des Vorstehens des Rohmaterials (1), nachdem der Abschnitt vom Messer abgeschert und zur Ausstosserstufe (Pfeilrichtung) transportiert wird,
Fig. 2c schematische Schnittdarstellung der Kollision zwischen dem zurücklaufenden (Pfeilrichtung), leeren Abschnittmesser und dem vorstehenden Rohmaterial,
Fig. 3 eine schematische Seitenansicht eines mechanischen Antriebes für den Materialeinzug vor der in Fig. 1a gezeigten Scherstation,
Fig. 4a eine schematische Schnittdarstellung eines Kurvengetriebes zum in Fig. 3 gezeigten Einzugantrieb,
Fig. 4b eine schematische Seitenansicht eines Materialeinzuges mit vier auf das Material gespannten Einzugsrollen,
Fig. 5 eine schematische Schnittdarstellung eines Teils des Materialeinzuges bei einer Schnittführung entlang der Linie A-A auf Fig. 3,
Fig. 6 eine schematische Darstellung der Einstell- und Steueranordnung zum Antriebselement 21.

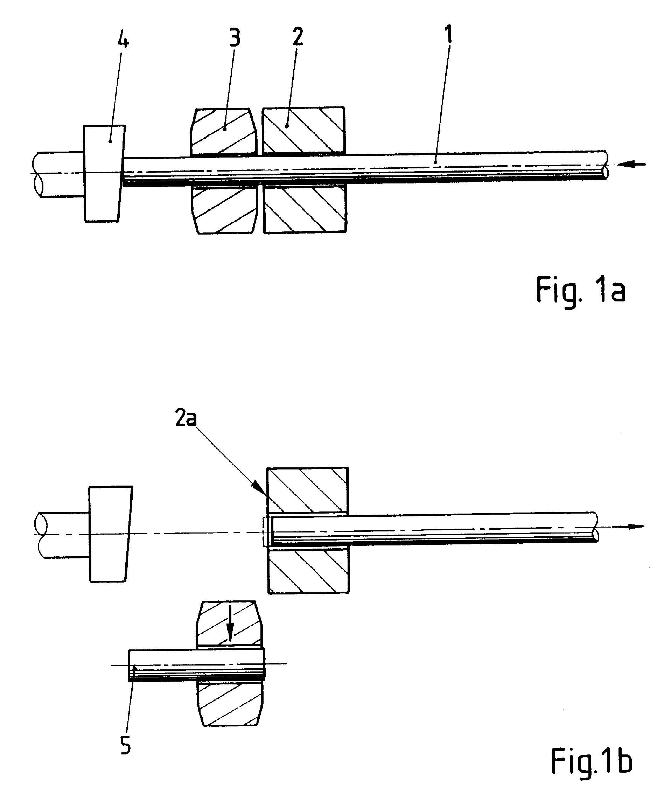

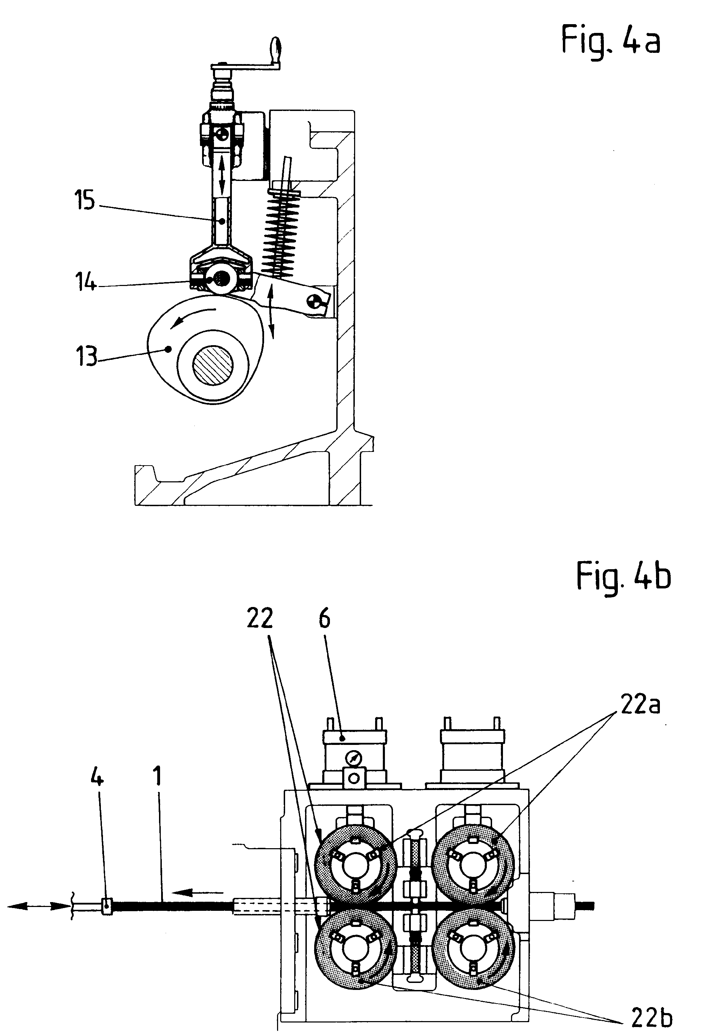

Bei der in Fig. 1a gezeigten Scherstation 2 und 3 wird das Material 1 in Pfeilrichtung eingezogen, dabei durch zwei hintereinanderliegende Paare von Einzugsrollen 22 (Fig. 4b) vorgeschoben und gegen einen Anschlag 4 gestossen. Bei dem Material handelt es sich vorwiegend um dünnen Draht, wie er üblicherweise für das Kaltumformen verwendet wird. Um das Drahtmaterial zwischen den Einzugsrollen 22 einführen und einspannen zu können, werden die gemäß Fig.4b oberen Einzugsrollen 22a über Pneumatikzylinder 6 angehoben, abgesenkt und dabei gegen den Draht 1 angepreßt. Der Draht 1 wird in Einzugrichtung hinter den Einzugsrollen 22 zunächst durch ein geschlossenes Drahtmesser 2 und dann durch ein ebenfalls geschlossenes Schermesser 3 bis zum Anschlag 4 eingezogen. Das Schermesser 3 wird zur Einleitung des Schervorgangs beispielsweise in Richtung des Pfeils quer zur Einzugsrichtung verlagert und trennt dabei einen in Fig. 1b unten dargestellten Drahtabschnitt 5 vom Draht 1 ab.

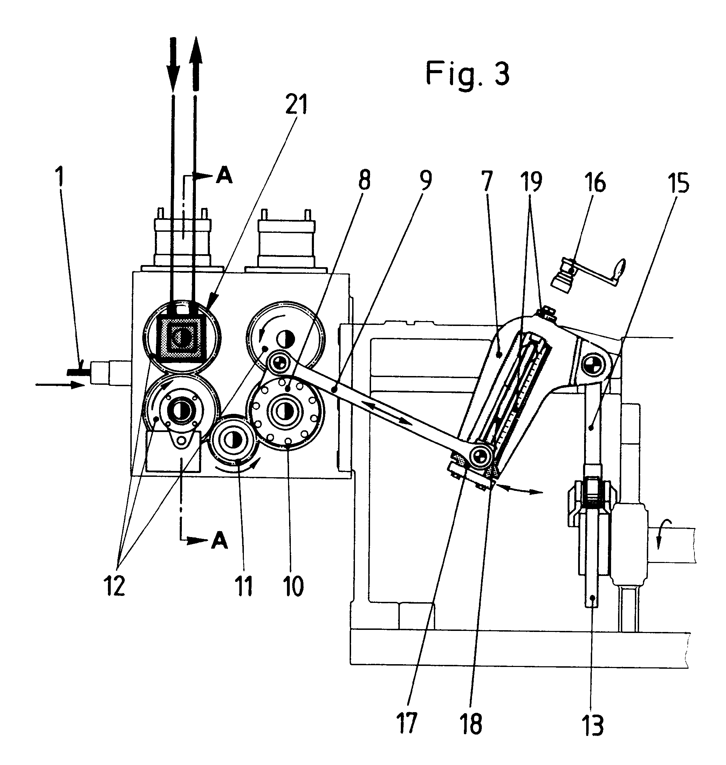

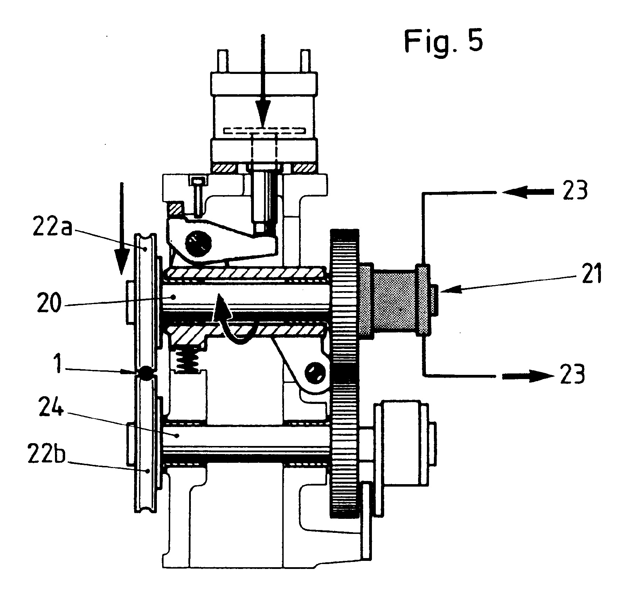

Aus Fig. 3 ist ersichtlich, daß jede Einzugsrolle 22 in Fig. 4b einzeln angetrieben wird. Die nur stoßweise und in einer Richtung erfolgende Drehung der Einzugsrollen 22 wird durch die Pendelbewegung eines Einzugshub-Verstellhebels 7 in Verbindung mit einem Freilauf 8 erzeugt, der mit dem Verstellhebel 7 durch eine Einzugs-Uebertragungsstange 9 gekoppelt ist. Mit dem Freilauf 10 ist ein Zahnradgetriebe 11, 12 des Einzugsrollenantriebs verbunden. Die Zahnräder stehen, wie aus Fig. 5 ersichtlich, über Einzugsrollenwellen 20, 24 mit den Einzugsrollen 22a bzw. 22b in Verbindung.

Der Einzugshub-Verstellhebel 7 wird seinerseits von einer Uebertragungsstange 15 (siehe Fig. 4a), die mit einer Kurvenrolle 14 auf einer Einzugssteuerkurve 13 abrollt, mit einem nicht dargestellten Hauptantrieb für die Umformpresse verbunden. Ueber die Einzugssteuerkurve 13 wird die intermittierende Arbeitsweise der Einzugsrollen 22 bewirkt. Eine Verstellung des Einzughubs kann dadurch erfolgen, dass mittels einer an dem Einzughub-Verstellhebel 7 angebrachten Handkurbel 16 oder eines entsprechenden Motorantriebs eine Verstellspindel 18 gedreht wird, die einen Gleitstein 17 innerhalb einer Führung im Verstellhebel 7 bewegt, wodurch der Hub der Einzugs-Uebertragungsstange verkürzt oder verlängert wird. Am Verstellhebel 7 und/oder an der Verstellspindel 18 vorgesehene Skalen 19 erlauben ein Ablesen der Hublänge. Anstelle der Skalen können auch elektrische Stellungsanzeiger vorgesehen sein.

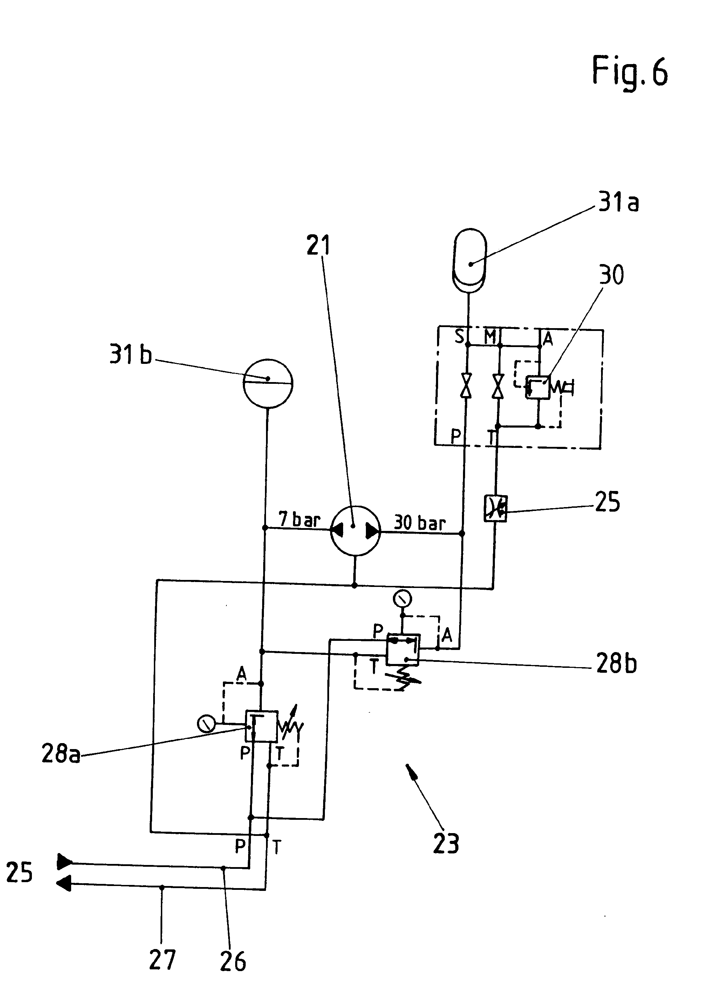

Mit der gemäss Fig. 5 oberen Einzugsrollenwelle 20 des in Vorschubrichtung des Drahts 1 vorderen Einzugsrollenpaars ist ein schematisch dargestelltes Antriebselement verbunden, das beim gezeigten Ausführungsbeispiel als Hydraulikmotor 21 dargestellt ist. Dieser Hydraulikmotor übt auf die Einzugsrollenwelle 20 und damit auf das ganze Einzugs-Zahngetriebe 10, 11, 12 ein dem Antriebsmoment ständig entgegengerichtetes kleineres Drehmoment aus. Die Drehrichtung der besagten oberen Einzugsrolle 22a in Fig. 4b verläuft, wie durch den Drehpfeil angezeigt, im Uhrzeigersinn, und der Hydraulikmotor 21 treibt dieselbe Einzugsrollenwelle 20 im Gegenuhrzeigersinn an, wie in Fig. 5 gezeigt. Eine Einstell- und Steueranordnung 23 (siehe Fig. 6) des Hydraulikmotors 21 dient zur Einstellung und Aufrechterhaltung dieses entgegenwirkenden Drehmoments, das weniger als 50% des Einzugsrollen-Antriebsmoments ausmacht.

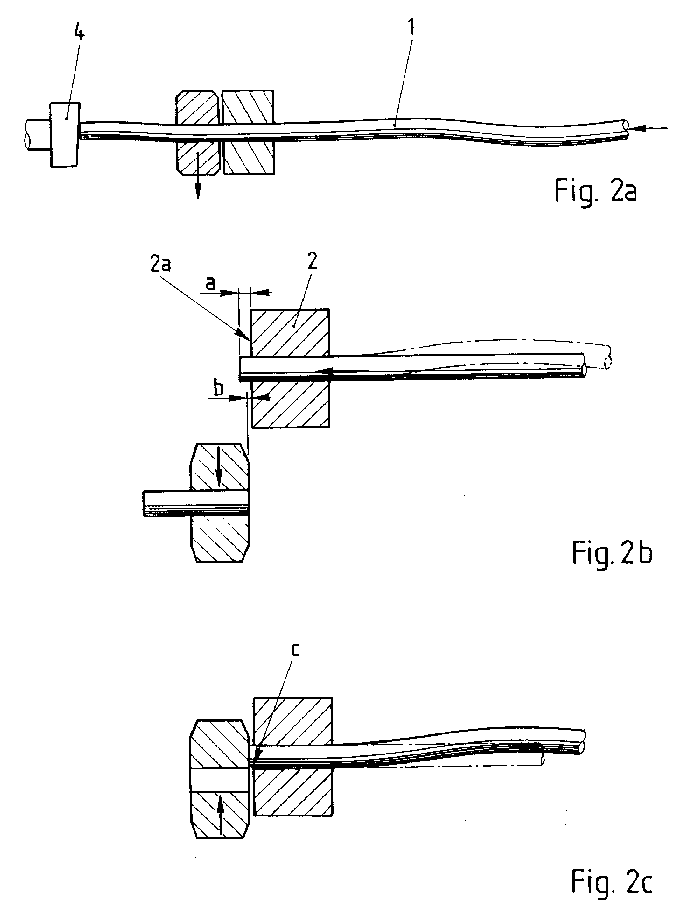

Wenn nun der Draht 1 in der in Fig. 1a gezeigten Weise mit seiner Abscher-Stirnfläche gegen den Anschlag 4 gestoßen werden soll, bewirkt der Hydraulikmotor 21, je nach der über die Einstell- und Steueranordnung 23 gewählten Gegen-Drehmomenteinstellung, die auch als Bremsmoment bezeichnet werden kann, ein im wesentlichen rückprallfreies Anstossen des Materials am Anschlag 4. Dadurch wird ein Durchbiegen des Drahtmaterials (siehe Fig. 2a) vor und nach den Scherwerkzeugen 2, 3 vermieden sowie auch jegliche Gratbildung oder Stauchung der Drahtmaterialstirnseite an der Anschlagfläche (siehe Fig. 2c).

Das durch den Hydraulikmotor 21 voreingestellte Gegen-Drehmoment bewirkt ferner, daß in den Stillstandsintervallen des Einzugsrollenantriebs, d.h. nach dem Abtrennen des Drahtabschnitts 5 ein in Fig. 1b eingezeichnetes Zurückziehen des Drahts 1 stattfindet, und zwar so weit, bis sich seine Stirnfläche hinter der Schnittkante 2a des Drahtmessers befindet. Dadurch kann das Schermesser 3, nachdem der Drahtabschnitt 5 ausgestossen wurde, in seine Scherposition zurückkehren, ohne dass der Draht an seiner Schneidflache entlangschürft. Die Stirnseite bei "c" (Fig. 2c) des Drahtmaterials verbleibt daher stets nach einem erfolgten Abtrennen unverändert erhalten, und auch die Schermesserfläche ist keiner Beschädigungsgefahr oder auch nur einem erhöhten Verschleiß ausgesetzt. Auch wird durch das sanfte Anschlagen der Drahtstirnseite die Kontaktfläche des Anschlags 4 sowie dessen Verstelleinrichtung in verschleißmindernder Weise geschont.

Die in Fig. 6 schematisch angedeutete Einstell- und Steueranordnung 23 umfaßt entsprechende Hydraulikleitungen 25, nicht dargestellte Druckwächter und auch entsprechend elektrisch betriebene Einstellungs-Steuerelemente. Dabei bedeuten
- 26: die hydraulische bzw. pneumatische Speiseleitung,
- 27: die Rückleitung
P = Druck,
T = Tank,
- 28a/28b: Druckeinstellelemente mit Manometer zur Variierung des Gegendrehmoments,
- 29: eine Drossel,
- 30: ein Ueberdruckelement,
- 31a/31b: Hydrospeicher als Druckausgleichselemente.

Ueber die Hydraulikleitungen lässt sich das Druckmedium problemlos außerhalb des Einzugsbereichs der Presse kühlen, so daß die Erzeugung des entgegenwirkenden Drehmoments praktisch verschleißlos ist. Eine leichte Funktionsüberwachung des Hydraulikmotors über die Einstell- und Steueranordnung 23 läßt sich durch Druckschalter oder dgl. bekannte Elemente vornehmen.

Die in Fig. 3 dargestellte Kopplung des Einzugsantriebs über das mechanische Kurvengetriebe mit dem Hauptantrieb der Umformpresse, stellt eine Antriebsart mit hoher Antriebssicherheit und äußerst günstiger Energiebilanz dar.

Dank der beschriebenen konstruktiven Ausbildung des Einzugsmechanismus ergibt sich nun auch die überraschend unkomplizierte Lösung des anderen, eingangs spezifizierten Aufgabenaspektes: Die notwendigerweise im mechanischen System der Vorrichtung vorhandenen Spiele werden durch das dem Antriebsdrehmoment überlagerte Zusatzmoment kontinuierlich aufgehoben, wodurch jegliche durch Spielbildung bewirkte Instabilität des Antriebs vermieden und ein sanfter, ruckfreier und geräuscharmer Betrieb gewährleistet ist, bzw. die vier Einzugsrollen gleichzeitig miteinander anfahren, was einen optimalen Wirkungsgrad für die Einzugskraft besitzt, wodurch der Anpressdruck der Rollen reduziert werden kann, was wiederum den totalen Stauchweg der Rohmateriallänge zwischen Einzugsrolle und Anschlag reduziert.

Die beschriebene Erfindung gestattet es somit, mit unkomplizierten Mitteln das gleichzeitige Anfahren sämtlicher Einzugsrollen, das sanfte Landen des Rohmaterials am Anschlag und das Zurückziehen des Materials im Einzugsintervall zu realisieren.

Wenn bei der Beschreibung des Beispiels von "Draht" die Rede ist, so soll dieser Ausdruck nicht nur das von einem Drahthaspel abziehbare Material, sondern auch das meist auf Warmpressen verarbeitete Stangenmaterial umfassen.

## Patentansprüche

1. Verfahren zum intermittierenden Einziehen von stangen- bzw. drahtförmigem Rohmaterial (1) in eine Scherstation (2, 3) einer Umformpresse zur spanlosen, mehrstufigen Umformung von Rohmaterialbschnitten (5), wobei das Rohmaterial (1) von Einzugsrollen (22) durch die Scheröffnung eines Schermessers (3) gegen einen einstellbaren Anschlag (4) gestossen und danach in Abschnitt (5) voreingestellter Länge unterteilt wird, dadurch gekennzeichnet, dass dem auf die Einzugsrollen (22a) ausgeübten Antriebsdrehmoment ein kontinuierlich entgegenwirkendes, variables Drehmoment überlagert wird, das kleiner als das Einzugsrollen-Antriebsdrehmoment ist und das in den Stillstandsintervallen des Einzugsrollenantriebs, das heisst nach erfolgtem Abtrennen eines Materialabschnitts (5), eine Rückzugbewegung des Rohmaterials (1) bewirkt, und zwar zumindest so weit, dass die Materialstirnfläche (c) nicht von dem seinen Rückhub ausführenden Schermesser (3) berührt wird.

2. Verfahren nach Anspruch 1, dadurch gekennzeichnet, dass das dem Antriebsdrehmoment entgegenwirkende Drehmoment jeweils auf einen materialbezogenen Konstantwert voreingestellt wird.

3. Verfahren nach Anspruch 1 oder 2, dadurch gekennzeichnet, dass die Rückzugbewegung des Rohmaterials (1) zumindest auf einen die Gesamtheit der Einzugsrollen-Antriebsspiele umfassenden Wert eingestellt wird.

4. Vorrichtung zum intermittierenden Einziehen von stangen- bzw. drahtförmigem Rohmaterial (1) in eine Scherstation - bestehend aus einem geschlossenen Drahtmesser (2) und einem geschlossenen Schermesser (3) - einer Umformpresse zur Durchführung des Verfahrens nach einem der Ansprüche 1 bis 3, umfassend mindestens ein am einzuziehenden Rohmaterial (1) angreifenden Einzugsrollenpaar (22) und ein mechanisches Kurvengetriebe (13, 14), womit der Einzugsantrieb des Rollenpaares (22) intermittierend vom Hauptantrieb der Umformpresse ableitbar ist, dadurch gekennzeichnet, dass der Einzugsantrieb mindestens einer Einzugsrolle (22, 22a) mit einem Antriebselement (21) gekoppelt ist, welches ein dem Einzugsrollen-Antriebsdrehmoment entgegenwirkende Drehmoment erzeugt, und dass diesem Antriebselement (21) eine Einstell- und Steueranordnung (23) zugeordnet ist, die das Antriebselement derart steuert, dass das entgegenwirkende Drehmoment kontinuierlich erzeugt wird, und kleiner ist, als das Einzugsrollen-Antriebsdrehmoment.

5. Vorrichtung nach Anspruch 4, dadurch gekennzeichnet, dass das Antriebselement (21) ein mit einer Antriebswelle (20) einer vom einzuziehenden Rohmaterial (1) abhebbaren Einzugsrolle (22a) gekoppelter Hydraulikmotor ist, und dass ein Hydrauliksystem dieses Hydraulikmotors in die Einstell- und Steueranordnung (23) integriert ist.

6. Vorrichtung nach Anspruch 4 oder 5, dadurch gekennzeichnet, dass die Einstell- und Steueranordnung (23) ferner eine Ueberwachungseinrichtung zur Kontrolle des dem Einzugsrollen-Antriebsdrehmoment entgegenwirkenden Drehmoments und der Rückzugbewegung des Rohmaterials (1) aufweist.

## Claims

1. A process for intermittently feeding bar-shaped or wire-shaped raw material (1) into a shearing station (2, 3) of a shaping press for the non-cutting, multiple-stage shaping of raw material portions (5), the raw material (1) being pushed by feed rollers (22) through the shearing opening of a shearing blade (3) against an adjustable stop (4) and subsequently being subdivided into portions (5) of preset length, **characterised in that** the driving torque exerted on the feed rollers (22a) is combined with a continuously counteracting, variable torque, which is smaller than the driving torque of the feed rollers and which, in the rest intervals of the feed roller drive, i.e. after a material portion (5) has been severed, brings about a withdrawal movement of the raw material (1), at least far enough that the front face (c) of the material is not touched by the shearing blade (3) as it performs its retum stroke.

2. A process according to Claim 1, **characterised in that** the torque counteracting the driving torque is in each case preadjusted to a constant value relative to the material.

3. A process according to Claim 1 or 2, **characterised in that** the withdrawal movement of the raw material (1) is adjusted at least to a value which includes the total play of the feed roller drive.

4. A device for intermittently feeding bar-shaped or wire-shaped raw material (1) into a shearing station - consisting of a closed wire blade (2) and a closed shearing blade (3) - of a shaping press for carrying out the process according to any one of Claims 1 to 3, comprising at least one pair of feed rollers (22) acting on the raw material (1) to be fed, and a mechanical cam gear (13, 14), with which the feed drive of the roller pair (22) can be derived intermittently from the main drive of the shaping press, **characterised in that** the feed drive of at least one feed roller (22, 22a) is coupled with a drive element (21) producing a torque which counteracts the driving torque of the feed rollers, and **in that** this drive element (21) is associated with an adjusting and controlling arrangement (23) which controls the drive element in such a maimer that the counteracting torque is produced continuously and is smaller than the driving torque of the feed rollers.

5. A device according to Claim 4, **characterised in that** the drive element (21) is a hydraulic motor coupled with a drive shaft (20) of a feed roller (22a) which can be lifted off the raw material (1) to be fed, and **in that** a hydraulic system of this hydraulic motor is integrated into the adjusting and controlling arrangement (23).

6. A device according to Claim 4 or 5, **characterised in that** the adjusting and controlling arrangement (23) also has a monitoring device for checking the torque counteracting the driving torque of the feed rollers and for checking the withdrawal movement of the raw material (1).

## Revendications

1. Procédé pour tirer par intermittence une matière brute (1) en forme de fil ou de barre dans un poste de coupe (2, 3) d'une presse de formage pour le formage sans copeaux, en plusieurs étapes, de sections de matière brute (5), la matière brute (1) étant poussée par des rouleaux entraîneurs (22) à travers l'ouverture de coupe d'un couteau à cisailler (3) contre une butée réglable (4) et étant ensuite subdivisée en sections de longueur préréglée, caractérisé en ce que l'on superpose au couple d'entraînement exercé sur les rouleaux entraîneurs (22a) un couple variable antagoniste et continu qui est plus petit que le couple d'entraînement des rouleaux entraîneurs et qui, dans les intervalles d'arrêt de l'entraînement des rouleaux entraîneurs, c'est-à-dire après qu'une section de matière (5) a été cisaillée, provoque un mouvement de recul de la matière brute (1) et ce, au moins dans une mesure telle que la face d'about (c) de la matière brute n'entre pas en contact avec le couteau (3) qui effectue sa course de retour.

2. Procédé suivant la revendication 1, caractérisé en ce que le couple agissant à l'encontre du couple d'entraînement est chaque fois préréglé à une valeur constante qui est fonction de la matière.

3. Procédé suivant la revendication 1 ou 2, caractérisé en ce que le mouvement de recul de la matière brute (1) est réglé au moins sur une valeur englobant la totalité des jeux d'entraînement des rouleaux entraîneurs.

4. Dispositif pour tirer par intermittence une matière brute (1) en forme de barre ou de fil dans un poste de coupe constitué d'un couteau à fil fermé (2) et d'un couteau de cisaillement fermé (3) d'une presse de formage pour réaliser le procédé suivant l'une quelconque des revendications 1 à 3, comprenant au moins une paire de rouleaux entraîneurs (22) attaquant la matière brute (1) à tirer et une commande à came mécanique (22) par laquelle l'entraînement de tirage de la paire de rouleaux (22) par intermittence peut être dérivé de l'entraînement principal de la presse de formage, caractérisé en ce que l'organe d'entraînement de tirage d'au moins un rouleau entraîneur (22, 22a) est accouplé à un élément d'entraînement (21) qui produit un couple agissant à l'encontre du couple d'entraînement des rouleaux entraîneurs, et à cet élément d'entraînement (21) est associé un circuit de réglage et de commande (23) qui commande l'élément d'entraînement, de telle sorte que le couple antagoniste soit produit de manière continue et soit plus petit que le couple d'entraînement des rouleaux entraîneurs.

5. Dispositif suivant la revendication 4, caractérisé en ce que l'élément d'entraînement (21) est un moteur hydraulique accouplé à un arbre d'entraînement (20) d'un rouleau entraîneur (22a) pouvant être soulevé par la matière brute (1) à tirer et qu'un système hydraulique de ce moteur hydraulique est intégré dans le circuit de réglage et de commande (23).

6. Dispositif suivant la revendication 4 ou 5, caractérisé en ce que le circuit de reglage de commande (23) comporte, en outre, un dispositif de surveillance pour controler le couple agissant à l'encontre du couple d'entraînement des rouleaux entraîneurs et le mouvement de recul de la matière brute (1).
